# EUROPEAN PATENT APPLICATION

(11) **EP 4 847 473 A1**
(43) Date of publication of application: **02.12.2026**
(21) Application number: 25745198.9
(22) Date of filing: 23.01.2025
(51) Int. Cl.: C04B 35/587, F16C 33/32, G01N 21/65

(54) **SILICON NITRIDE SINTERED BODY AND WEAR-RESISTANT MEMBER USING SAME**

(30) Priority: 24.01.2024 JP 2024008727
(71) Applicant: Niterra Materials Co., Ltd., Kanagawa 235-0032 (JP)
(72) Inventor: OOKUBO, Kazuya, Yokohama-shi, Kanagawa 235-0032 (JP); SANO, Shoya, Yokohama-shi, Kanagawa 235-0032 (JP); SANO, Takashi, Yokohama-shi, Kanagawa 235-0032 (JP)
(74) Representative: Hoffmann Eitle
(86) International application number: PCT/JP2025/002047
(87) International publication number: WO 2025/159155

(57) **Abstract**

A silicon nitride sintered compact according to an embodiment, in Raman imaging of a measurement region of a specific cross-section, includes a first region, a second region, a third region, and a fourth region. Among a region of silicon nitride crystal particles oriented in a direction close to a vertical direction of the specific cross-section and a region of silicon nitride crystal particles oriented in a direction close to a parallel direction of the specific cross-section, a region having a smaller area ratio is mapped as the first region, and a region having a larger area ratio is mapped as the second region. A rare earth element-aluminum-oxygen grain boundary phase is mapped as the third region, and a substance containing at least one selected from titanium, hafnium, tungsten, molybdenum, and silicon carbide is mapped as the fourth region. Area ratios are 0.5-8%, 70-92%, 2-16%, and 0.5-8%, respectively.

## Description

### TECHNICAL FIELD

An embodiment described later mainly relates to a silicon nitride sintered compact and a wear-resistant member including the same.

### BACKGROUND ART

Silicon nitride sintered compacts are used in wear-resistant members. Examples of such wear-resistant members include bearing members, roll materials, compressor vanes, gas turbine blades, and engine parts. Examples of bearing members include bearing balls, bearing inner rings, and bearing outer rings. Examples of roll materials include rolling rolls and transportation rolls. Examples of engine parts include cam rollers. Recently, silicon nitride sintered compacts, which have high mechanical strength and wear resistance, are used as bearing balls as bearing members.

For example, Japanese Patent No. 5100201 (Patent Document 1) discloses a silicon nitride sintered compact comprising needle-like silicon nitride crystal particles whose aspect ratio and standard deviation are controlled. Japanese Patent No. 6416088 (Patent Document 2) discloses a silicon nitride sintered compact including a grain boundary phase whose area ratio is less likely to be varied. Patent Documents 1 and 2 each cause silicon nitride crystal particles and a grain boundary phase to be uniformly distributed. Thus, silicon nitride sintered compacts having improved wear resistance are obtained.

### PRIOR ART DOCUMENTS

### PATENT DOCUMENT

Patent Document 1: Japanese Patent No. 5100201
Patent Document 2: Japanese Patent No. 6416088

### SUMMARY OF THE INVENTION

### PROBLEMS TO BE SOLVED BY THE INVENTION

Recently, silicon nitride sintered compacts are used in bearing balls for motors of electric vehicles. This has been significantly increasing a demand for bearing balls formed from silicon nitride sintered compacts. On the other hand, silicon nitride sintered compacts are difficult to process. For this reason, a further improvement in processability of silicon nitride sintered compacts, that is, a reduction in processing time has been demanded in order to achieve mass production of bearing balls formed from silicon nitride sintered compacts.

An object to be solved by an embodiment is to provide a silicon nitride sintered compact having improved processability and a wear-resistant member including the same.

### MEANS FOR SOLVING THE PROBLEMS

A silicon nitride sintered compact according to an embodiment has the following configuration. In Raman imaging of a measurement region of 20 µm × 20 µm of a specific cross-section of the silicon nitride sintered compact where (1) among a region of silicon nitride crystal particles oriented in a direction close to a vertical direction of the specific cross-section within the measurement region and a region of silicon nitride crystal particles oriented in a direction close to a parallel direction of the specific cross-section, a region of silicon nitride crystal particles having a smaller area ratio is mapped as a first region, (2) a region of silicon nitride crystal particles having a larger area ratio is mapped as a second region, (3) a region of a rare earth element-aluminum-oxygen grain boundary phase within the measurement region is mapped as a third region, and (4) a region of a substance containing at least one selected from the group consisting of titanium, hafnium, tungsten, molybdenum, and silicon carbide within the measurement region is mapped as a fourth region. An area ratio of the first region is 0.5% or more and 8% or less, that of the second region is 70% or more and 92% or less, that of the third region is 2% or more and 16% or less, and that of the fourth region is 0.5% or more and 8% or less, where a total of the area ratio of the first region, that of the second region, that of the third region, and that of the fourth region is regarded as 100%. Among different measurement regions, a difference ratio of the area ratios of the first regions is optionally 2% or more and a difference ratio of the area ratios of the fourth regions is optionally 2% or more.

### BRIEF DESCRIPTION OF THE DRAWINGS

[FIG. 1] FIG. 1 is a schematic view illustrating one example of Raman imaging of a silicon nitride sintered compact according to an embodiment.
[FIG. 2] FIG. 2 is a diagram illustrating one example of a Raman spectrum of a first region and that of a second region in the silicon nitride sintered compact according to the embodiment.
[FIG. 3] FIG. 3 is a diagram illustrating another example of Raman imaging of the silicon nitride sintered compact according to the embodiment.
[FIG. 4] FIG. 4 is an appearance view illustrating one example of a bearing ball based on the silicon nitride sintered compact according to the embodiment.
[FIG. 5] FIG. 5 is an appearance view illustrating one example of a bearing ball blank formed from the silicon nitride sintered compact according to the embodiment.

### DESCRIPTION OF EMBODIMENTS

A silicon nitride sintered compact according to an embodiment has the following configuration. In Raman imaging of a measurement region of 20 µm × 20 µm of a specific cross-section of the silicon nitride sintered compact where (1) among a region of silicon nitride crystal particles oriented in a direction close to a vertical direction of the specific cross-section within the measurement region and a region of silicon nitride crystal particles oriented in a direction close to a parallel direction of the specific cross-section, a region of silicon nitride crystal particles having a smaller area ratio is mapped as a first region, (2) a region of silicon nitride crystal particles having a larger area ratio is mapped as a second region, (3) a region of a rare earth element-aluminum-oxygen grain boundary phase within the measurement region is mapped as a third region, and (4) a region of a substance containing at least one selected from the group consisting of titanium, hafnium, tungsten, molybdenum, and silicon carbide within the measurement region is mapped as a fourth region. An area ratio of the first region is 0.5% or more and 8% or less, that of the second region is 70% or more and 92% or less, that of the third region is 2% or more and 16% or less, and that of the fourth region is 0.5% or more and 8% or less, where a total of the area ratio of the first region, that of the second region, that of the third region, and that of the fourth region is regarded as 100%. Among different measurement regions, a difference ratio of the area ratios of the first regions is optionally 2% or more and a difference ratio of the area ratios of the fourth regions is optionally 2% or more.

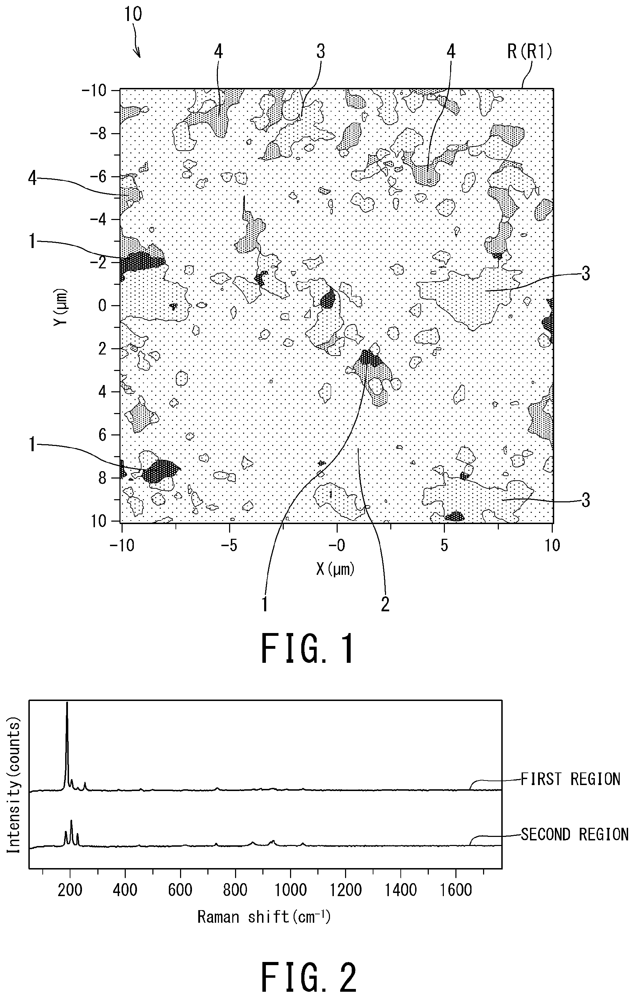

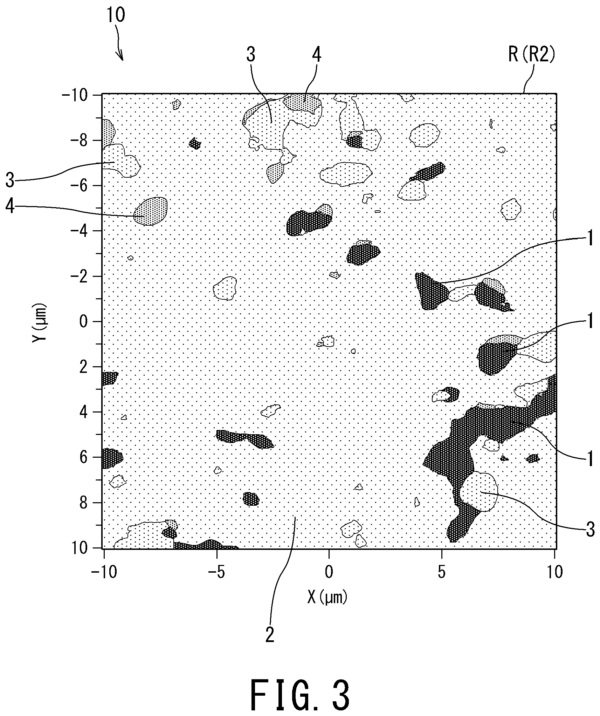

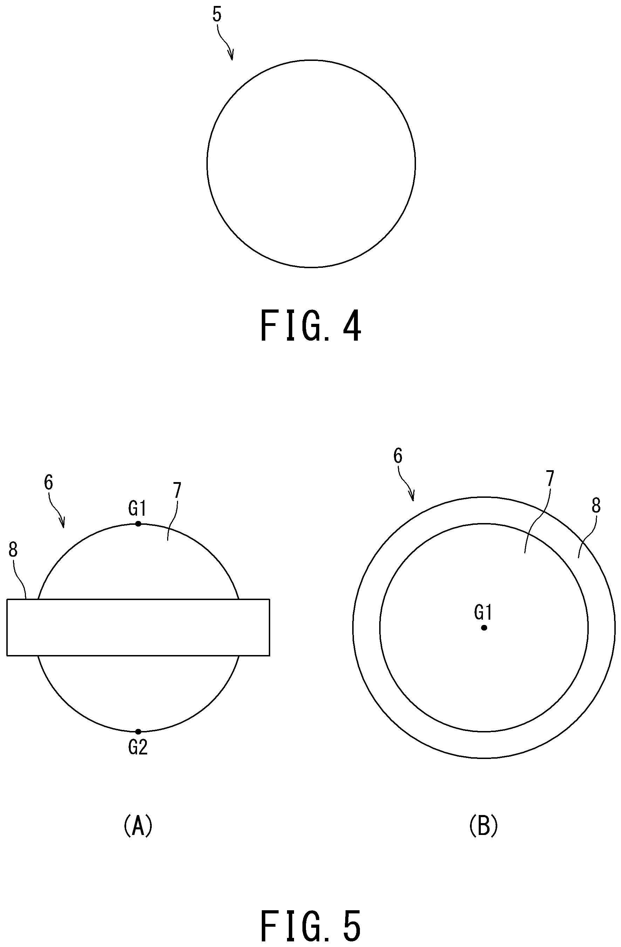

FIGS. 1 and 3 are schematic views illustrating one example of Raman imaging of a silicon nitride sintered compact according to the embodiment. The drawings illustrate a silicon nitride sintered compact 10, a first region 1 of the silicon nitride sintered compact 10, a second region 2 of the silicon nitride sintered compact 10, a third region 3 of the silicon nitride sintered compact 10, and a fourth region 4 of the silicon nitride sintered compact 10. One example of the silicon nitride sintered compact 10 is a bearing ball blank 6 illustrated in FIG. 5.

FIG. 1 illustrates the result of Raman imaging of a measurement region R (e.g., a measurement region R1) in a specific cross-section of the silicon nitride sintered compact 10. FIG. 3 illustrates the result of Raman imaging of a measurement region R different from that in FIG. 1 (e.g., a measurement region R2) in the silicon nitride sintered compact 10. The measurement region R2 may be a region in a specific cross-section different from a specific cross-section of the measurement region R1, or may be a region different from the measurement region R1 in a specific cross-section of the measurement region R1. Unlike FIGS. 1 and 3, actual Raman imaging may include color mapping.

Raman imaging is a method of measuring information of a predetermined area within a measurement region R of 20 µm × 20 µm in a specific cross-section of the silicon nitride sintered compact 10. The specific cross-section can be selected from any region as long as the measurement region R (or 400 µm × 400 µm described later) can be ensured. The micro-laser Raman apparatus to be used is LabRAM HR Evolution available from HORIBA, Ltd. or an apparatus equivalent thereof. The excitation laser has a wavelength of 532 nm with the laser output of 20.8 mW, and a grating of 600 gr/mm is used. An object lens of 100x is used. The exposure time is 1 second, accumulations are 3 times, the measurement region R is 20 µm × 20 µm, and the measurement pitch is 0.25 µm. The data obtained from a Raman shift of 100 to 1700 cm⁻¹ is subjected to multivariate analysis to perform Raman imaging. The measurement sample is any cross-section of the silicon nitride sintered compact 10, and has a polished surface polished to have a surface roughness Ra of 1 µm or less. For example, examples of color mapping include a method of representing the first region 1 in blue, the second region 2 in green, the third region 3 in orange, and the fourth region 4 in red.

Raman imaging is performed on the first region 1, the second region 2, the third region 3, and the fourth region 4 within the measurement region R described below. Initially, the first region 1 is a region of silicon nitride crystal particles having a smaller area ratio in comparison between a region of silicon nitride crystal particles oriented in a direction close to the vertical direction of the specific cross-section and a region of silicon nitride crystal particles oriented in a direction close to the parallel direction of the specific cross-section. The second region 2 is a region of silicon nitride crystal particles having a larger area ratio among a plurality of silicon nitride crystal particles within the measurement region R. Hereinafter, unless otherwise specified, a case will be described in which the first region 1 is the region of silicon nitride crystal particles oriented in a direction close to the vertical direction of the specific cross-section and the second region 2 is the region of silicon nitride crystal particles oriented in a direction close to the parallel direction of the specific cross-section. The third region 3 is a region of a rare earth element-aluminum-oxygen grain boundary phase within the measurement region R. The fourth region 4 is a region of a substance including at least one selected from the group consisting of titanium, hafnium, tungsten, molybdenum, and silicon carbide within the measurement region R.

In the silicon nitride sintered compact 10 according to the embodiment, the total of the area ratios of the first region 1, the second region 2, the third region 3, and the fourth region 4 within the measurement region R is within the range of 95% or more and 100% or less. In other words, the area ratio of the region other than the first to fourth regions 1 to 4 is 0% or more and 5% or less. The total of the area ratios of the first region 1, the second region 2, the third region 3, and the fourth region 4 is suitably 100%.

The first region 1 and the second region 2 are regions of silicon nitride crystal particles. The silicon nitride crystal particles include SiAlON crystal particles. The first region 1 and the second region 2 have a difference in the orientation direction. FIG. 2 illustrates a Raman spectrum of the first region 1 and that of the second region 2. In FIG. 2, the ordinate represents intensity (relative ratio), and the abscissa represents Raman shift (cm⁻¹). In FIG. 2, the upper portion indicates the Raman spectrum of the first region 1, and the lower portion indicates that of the second region 2.

As illustrated in FIG. 2, in the first region 1 and the second region 2, three or four peaks are detected between 180 cm⁻¹ inclusive and 230 cm⁻¹. In the first region 1, the peak on the left as one faces (peak detected at 184 to 190 cm⁻¹) is the largest peak. In the second region 2, the middle peak (peak detected at 200 to 210 cm⁻¹) shows larger intensity. A difference in orientation direction causes a difference in detection position of the largest peak among the peaks detected between 180 cm⁻¹ inclusive and 230 cm⁻¹. The silicon nitride crystal particles having an orientation direction closer to the vertical direction or the parallel direction are classified by the detection position of the largest peak. Five or more peaks may be detected between 180 cm⁻¹ inclusive and 230 cm⁻¹.

The silicon nitride crystal particles (including SiAlON crystal particles) are classified into β-type and an α-type. The β-type consists of cylindrical particles. The α-type consists of spherical particles. The cylindrical particles are particles having a relatively large aspect ratio. The spherical particles are particles having a relatively small aspect ratio. The α-type has an aspect ratio of 1.5 or less.

The first region 1 is a region of silicon nitride crystal particles oriented in a direction close to the vertical direction of the specific cross-section. Here, the major diameter of the β-type cylindrical particle is oriented in the vertical direction. At least part of the first region 1 may include the α-type spherical particles. The spherical particles, which have low orientation properties, can be contained in one of the first region 1 and the second region 2. The orientation direction of the major diameter of the β-type cylindrical particle is not limited to 90° (i.e., vertical). The orientation direction is determined by the detection position of the largest peak among the peaks detected at 180 cm⁻¹ inclusive and 230 cm⁻¹.

The second region 2 is a region of silicon nitride crystal particles oriented in a direction close to the parallel direction of the specific cross-section. Here, the major diameter of the β-type cylindrical particle is oriented in the parallel direction. The orientation direction of the major diameter of the β-type cylindrical particle is not limited to 180° (i.e., parallel). The orientation direction is determined by the detection position of the largest peak among the peaks detected at 180 cm⁻¹ inclusive and 230 cm⁻¹.

The third region 3 is a region of a rare earth element-aluminum-oxygen grain boundary phase. Examples of the rare earth element include at least one selected from the group consisting of yttrium and lanthanoids elements. Examples of the lanthanoids elements include lanthanum (La), cerium (Ce), erbium (Er), ytterbium (Yb), dysprosium (Dy), lutetium (Lu), and europium (Eu).

The rare earth element-aluminum-oxygen grain boundary phase represents a compound in which a rare earth element, aluminum, and oxygen are bonded. The rare earth element-aluminum-oxygen grain boundary phase may contain an additional element as a constitutional element of the rare earth element-aluminum-oxygen compound. Examples of the additional constitutional element include nitrogen (N), magnesium (Mg), calcium (Ca), and hafnium (Hf).

The fourth region 4 is a region of a substance containing at least one selected from the group consisting of titanium, hafnium, tungsten, molybdenum, and silicon carbide. The substance containing at least one selected from the group consisting of titanium, hafnium, tungsten, molybdenum, and silicon carbide in the fourth region 4 is distributed as a single metal or a compound. Examples of the compound include at least one selected from the group consisting of oxides, nitrides, carbides, sulfides, oxynitrides, carbon oxynitrides, and carbonitrides. The fourth region 4 may be distributed in the third region 3. This indicates that the fourth region 4 can be distributed in the grain boundary phase.

When the total of the area ratios of the first region 1, the second region 2, the third region 3, and the fourth region is 100%, the area ratios of the first to fourth regions 1 to 4 satisfy the following conditions (A) to (D):
Condition (A): the area ratio of the first region 1 is 0.5% or more and 8% or less.
Condition (B): the area ratio of the second region 2 is 70% or more and 92% or less.
Condition (C): the area ratio of the third region 3 is 2% or more and 16% or less.
Condition (D): the area ratio of the fourth region 4 is 0.5% or more and 8% or less.

When the requirement that the area ratio of the first region 1 is 0.5% or more and 8% or less, that of the second region 2 is 70% or more and 92% or less, that of the third region 3 is 2% or more and 16% or less, and that of the fourth region 4 is 0.5% or more and 8% or less is satisfied, it indicates that these regions are present within the measurement region R.

In the first region 1 and the second region 2, silicon nitride crystal particles are oriented in different orientation directions. By such a presence of silicon nitride crystal particles oriented in different orientation directions, the silicon nitride sintered compact 10 can have improved strength.

The third region 3 forms a grain boundary phase present so as to fill in gaps between the silicon nitride crystal particles. The presence of the grain boundary phase can also improve the strength of the silicon nitride sintered compact 10.

The fourth region 4 serves as a component which reinforces the third region 3. In other words, the fourth region 4 distributed in the grain boundary phase can reinforce the grain boundary phase.

Suitably, the silicon nitride sintered compact 10 according to the embodiment further satisfies the following conditions (E) to (F) in the specific cross-section. Here, the difference ratio of the area ratio is the value obtained by dividing the difference between the area ratios by the average of the area ratios.

Condition (E): the difference ratio of the area ratios of the first regions 1 in different measurement regions R is optionally 2% or more.

Condition (F): the difference ratio of the area ratios of the fourth regions 4 in different measurement regions R is optionally 2% or more.

These indicate that the area ratio of the first region 1 within the measurement region R is 0.5% or more and 8% or less, and a region is present in which the difference ratio of the area ratios of the first regions 1 between the measurement region R and different measurement regions R is 2% or more. These indicate that when the area ratio of the fourth region 4 within the measurement region R is 0.5% or more and 8% or less, a region is present in which the difference ratio of the area ratios of the fourth regions 4 between the measurement region R and different measurement regions R is 2% or more. These indicate that the first region 1 and the fourth region 4 are unevenly distributed within the measurement region R and thus, in the silicon nitride sintered compact 10. The presence of such uneven distributions thereof can improve the free-machining properties of the silicon nitride sintered compact 10.

The presence of the silicon nitride crystal particles oriented in different orientation directions (in the first region 1 and the second region 2) and the grain boundary phase reinforcing component (fourth region 4) improves the strength of the silicon nitride sintered compact 10. A uniform structure as in Patent Document 1 or 2 improves the mechanical properties such as strength. On the other hand, such a structure is limited in improving the free-machining properties of the silicon nitride sintered compact 10. To improve the free-machining properties of the silicon nitride sintered compact 10 while the strength is maintained, preferably, the first region 1, the second region 2, and the fourth region 4 are unevenly distributed.

Suitably, the silicon nitride sintered compact 10 further satisfies the following conditions (G) to (H) in the specific cross-section.

Condition (G): in a region of 400 µm × 400 µm, a measurement region R is present in which the difference ratio of the area ratios of the first regions 1 is 2% or more and the difference ratio of the area ratios of the fourth regions 4 is 2% or more.

Condition (H): in a region of 400 µm × 400 µm, adjacent measurement regions R are present in which the difference ratio of the area ratios of the first regions 1 is 2% or more and the difference ratio of the area ratios of the fourth regions 4 is 2% or more.

When the conditions (G) to (H) are satisfied, the first region 1 and the fourth region 4 are unevenly distributed in a relatively small region of 400 µm × 400 µm, which further improves the free-machining properties of the silicon nitride sintered compact 10. It is also preferred that in adjacent measurement regions R in a region of 400 µm × 400 µm, a region be present in which the difference ratio of the area ratios of the first regions 1 is 2% or more and the difference ratio of the area ratios of the fourth regions 4 is 2% or more. The upper limit of the difference ratio of the area ratios of the first region 1 and the difference ratio of the area ratios of the fourth regions 4 are suitably 6% or less.

Regions obtained by dividing the measurement region R into 4 are defined as small regions. The four small regions obtained by dividing the measurement region R into four are measured. Preferably, the measurement region R includes at least one small region in which the difference ratio of the area ratios of the first regions 1 is 2% or more and the difference ratio of the area ratios of the fourth regions 4 is 2% or more. In other words, it is preferred that the difference ratio of the area ratios be present while the predetermined distributions are satisfied.

Preferably, a plurality of first regions 1 are present within the measurement region R. The presence of a plurality of first regions 1 within the measurement region R indicates that a plurality of small first regions 1 are present. The presence of a plurality of small first regions 1 enables formation of a structure in which silicon nitride crystal particles in the small first regions are entangled with those in the second region 2 in a complex manner. Such a structure can further improve the strength of the silicon nitride sintered compact 10. The upper limit of the number of first regions 1 present within the measurement region R is not particularly limited. Preferably, the upper limit is 15 or less. If the upper limit is more than 15, it may be difficult to control the area ratio of the first region 1 within the range of 0.5 to 8%. For this reason, the number of first regions 1 within the measurement region R is preferably in the range of 2 or more and 15 or less.

Preferably, a plurality of fourth regions 4 are present within the measurement region R. The presence of a plurality of fourth regions 4 within the measurement region R indicates that a plurality of small fourth regions 4 are present. The fourth region 4 is a component which reinforces the third region (grain boundary phase) 3. By distributing a plurality of small fourth regions 4, the amount of the reinforced grain boundary phase can be increased. The upper limit of the number of fourth regions 4 present within the measurement region R is not particularly limited. Preferably, it is 30 or less. If it is more than 30, it may be difficult to control the area ratio of the fourth region 4 within the range of 0.5 to 8%. For this reason, the number of fourth regions 4 present within the measurement region R is preferably 2 or more and 30 or less.

The number of first regions 1 and the number of fourth regions 4 are determined using Raman imaging described above. In a color mapped image, first regions 1 connected to each other are counted as one. Likewise, in a color mapped image, fourth regions 4 connected to each other are counted as one.

The third region 3 formed from the rare earth element-aluminum-oxygen grain boundary phase preferably contains an amorphous phase. When the grain boundary phase is amorphous, it easily enters gaps between the silicon nitride crystal particles. It facilitates formation of a silicon nitride sintered compact 10 having a small amount of pores.

The substance which is present in the fourth region 4 and contains at least one selected from the group consisting of titanium, hafnium, tungsten, molybdenum, and silicon carbide preferably includes the one which is present as a crystalline compound. If the substance is a crystalline compound, it is easily distributed as small particles in the grain boundary phase. Thereby, the grain boundary phase reinforcing function is readily given.

Preferably, the third region 3 is an amorphous grain boundary phase and the fourth region 4 is a crystalline compound. In this case, a silicon nitride sintered compact 10 having a small amount of pores and including a reinforced grain boundary phase can be formed.

Such a silicon nitride sintered compact 10 can have a 3-point bending strength of 600 MPa or more, and further can have a 3-point bending strength of 900 MPa or more. The silicon nitride sintered compact 10 can have a fracture toughness of 6.0 MPa·m^{1/2} or more, and further can have a fracture toughness of 7.0 MPa·m^{1/2} or more.

The 3-point bending strength is measured in accordance with JIS-R-1601 (2008). JIS-R-1601 corresponds to ISO14704. The fracture toughness can be determined by an IF method in accordance with JIS-R-1607 (2015) using Niihara's equation. JIS-R-1607 corresponds to ISO15732.

The silicon nitride sintered compact 10 according to the embodiment is suitable for a wear-resistant member. The wear-resistant member preferably has a sliding surface having a surface roughness Ra of 0.1 µm or less. Examples of the wear-resistant member include bearing members, roll materials, compressor vanes, gas turbine blades, and engine parts. Examples of bearing members include bearing balls, bearing inner rings, and bearing outer rings. Examples of roll materials include rolling rolls and transportation rolls. Examples of engine parts include cam rollers.

The wear-resistant member has a sliding surface which slides on a counterpart member. For example, a bearing ball is disposed between the inner ring of the bearing and the outer ring thereof. In a bearing ball formed from a ball-shaped silicon nitride sintered compact 10, the entire surface of the ball serves as the sliding surface. In a roll formed from a cylindrical silicon nitride sintered compact 10, the surface of the roll serves as the sliding surface.

To improve the wear resistance of the sliding surface, polishing of the sliding surface to have a surface roughness Ra of 0.1 µm or less is effective. In the silicon nitride sintered compact 10 according to the embodiment, the area ratios of the first to fourth regions 1 to 4 are controlled, and the first region 1 and the fourth region 4 are caused to be unevenly distributed. Thereby, free-machining properties are improved. For example, the surface roughness of the bearing ball is specified in ASTM_F2094. A bearing ball having a grade specified in ASTM_F2094, ISO_26602, or JIS_R1669 is used according to its application. The sliding surface is polished to have a surface roughness Ra according to the grade. When the grade is higher, the sliding surface may be subjected to a mirror surface treatment to have a surface roughness Ra of 0.01 µm or less. In the silicon nitride sintered compact 10 according to the embodiment, the free-machining properties are improved while the wear resistance is maintained. The polishing step for obtaining a sliding surface having a surface roughness Ra of 0.1 µm or less can be efficiently performed.

FIG. 4 illustrates one example of a bearing ball, and FIG. 5 illustrates one example of a bearing ball blank (hereinafter, simply referred to as "ball blank"). The drawings illustrate a bearing ball 5, a ball blank 6, a spherical surface 7 of the ball blank 6, and a band portion 8 of the ball blank 6. Division (A) of FIG. 5 illustrates a ball blank 6 viewed in a direction intersecting perpendicular to the straight line connecting two poles G1 and G2 of the band portion 8 (two vertices when a surface including the band portion 8 is regarded as the bottom), and division (B) of FIG. 5 illustrates the ball blank 6 viewed in a direction along the line connecting the two poles G1 and G2 of the band portion 8. The ball blank 6 is polished to give a bearing ball 5. Although FIG. 5 exemplifies the ball blank 6 having the band portion 8 on a perimeter of the spherical surface 7, the ball blank without the band portion 8 can be used. In other words, the ball blank 6 corresponds to the bearing ball 5 before polishing.

Next, a method of producing the silicon nitride sintered compact 10 according to the embodiment will be described. Although the silicon nitride sintered compact 10 according to the embodiment can be produced by any production method as long as it has the above-mentioned configuration, a method for producing the silicon nitride sintered compact 10 according to the embodiment with high yield will be described below.

Initially, raw material powders are provided. The raw material powders are a silicon nitride powder and a sintering aid powder. The silicon nitride powder preferably has an average particle size of 3 µm or less. In addition, the silicon nitride powder preferably contains 3% by mass or less of oxygen and has an α-type ratio of 90% or more.

Examples of the sintering aid powder include rare earth element component powders, aluminum component powder, and powders containing at least one component selected from the group consisting of titanium, hafnium, tungsten, molybdenum, and silicon carbide. Preferably, the sintering aid powder has an average particle size of 4 µm or less.

Preferably, the average particle size of the silicon nitride powder is different from the average particle size of the sintering aid powder. Preferably, the average particle size of the silicon nitride powder is smaller than the average particle size of the sintering aid powder. Selection of such different average particle sizes can provide a difference between the area ratios of the first regions 1 and the area ratios of the fourth regions 4.

Examples of the rare earth element component powder include powders of oxides, nitrides, and oxynitrides of rare earth elements. Preferred rare earth elements are yttrium and lanthanoids elements. Examples of the aluminum component powder include powders of oxides, nitrides, and oxynitrides of aluminum. As the aluminum component powder, powder of at least aluminum oxide (Al₂O₃) is preferably used.

Preferably, both of a rare earth element oxide powder and an aluminum oxide powder are used. Thereby, the rare earth element-aluminum-oxygen grain boundary phase as the third region can be formed. When oxygen is contained as a constitutional element, the rare earth element-aluminum-oxygen grain boundary phase can be formed as an amorphous phase.

Examples of the powders containing at least one component selected from the group consisting of titanium, hafnium, tungsten, and molybdenum include powders of oxides, nitrides, carbides, oxynitrides, oxycarbides, and carbonitrides thereof. Silicon carbide is preferably added as a silicon carbide powder. These components are those for forming the fourth region.

Among these, oxides or carbides are preferred. Examples of the oxides include titanium oxide (TiO₂), hafnium oxide (HfO₂), tungsten oxide (WO₃), and molybdenum oxide (MoO₃). When such an oxide is used, the oxide is reacted with silicon nitride to form a nitride. For example, titanium oxide (TiO₂) forms titanium nitride (TiN) as the result of reaction with silicon nitride. At this time, titanium nitride can be distributed in the grain boundary phase as titanium nitride particles. Thereby, the grain boundary phase can be reinforced. As the result of the formation of the oxide into a nitride, the grain boundary phase can be obtained as a crystal phase.

Examples of the carbides include titanium carbide (TiC), hafnium carbide (HfC), tungsten carbide (WC), and molybdenum carbide (Mo₂C). Carbide particles, as they are, serve as a component for reinforcing the grain boundary phase. Silicon carbide is a component for reinforcing the grain boundary phase as SiC particles. Thus, by adding carbide particles as a crystalline compound, the carbide particles as a crystalline compound can be distributed. The same applies to the case where a nitride is added.

In 100% by mass of "silicon nitride powder" + "rare earth element component powder" + "aluminum component powder" + "powder containing at least one component selected from the group consisting of titanium, hafnium, tungsten, molybdenum, and silicon carbide", preferably, the content of "rare earth element component powder" is 1% by mass or more and 13% by mass or less, that of "aluminum component powder" is 1% by mass or more and 10% by mass or less, that of "powders containing at least one component selected from the group consisting of titanium, hafnium, tungsten, molybdenum, and silicon carbide" is 0.1% by mass or more and 7% by mass or less, and the balance is that of "silicon nitride powder". Control of the mixing ratio leads to control of the area ratios of the first to fourth regions.

Next, a step of mixing the raw material powders is performed. The mixing step is performed using a mill such as a ball mill. The ball mill can mix the raw material powders with a medium to disintegrate the raw material powders. By disintegrating the raw material powders, generation of aggregates can be suppressed. The ball mill can be either a wet type or a dry type. Preferably, raw material powders treated by the ball mill set at different conditions are mixed. The conditions for the ball mill include the rotational speed of the ball mill, the amounts of the raw material powders added, and the treatment time. The conditions may also include the difference between wet mixing and dry mixing. The mixing under different conditions indicates that the raw material powders treated under a first condition are mixed with the raw material powders treated under a second condition. To be noted, 3 or more raw material powders treated under different conditions may be used.

Mixing of the raw material powders in different disintegration states provides a difference between the area ratios of the first regions 1 and the area ratios of the fourth regions 4. The mixing step may be performed by adding an organic binder and a solvent to the raw material powders as needed.

Next, the raw material prepared in the mixing step is molded into a silicon nitride green compact (hereinafter, simply referred to as "green compact") in a molding step. The molding step can be performed by mold molding, tumbling granulation, cold isostatic pressing (CIP), doctor blading, or injection molding, for example. When a spherical green compact is prepared, mold molding, tumbling granulation, and CIP are preferably used. CIP of a green compact prepared by mold molding or tumbling granulation is also effective. CIP is a molding method in which a liquid is used as a pressurizing medium. Since the liquid isotropically applies pressure, a green compact having a uniform distribution of density can be obtained. The pressure for CIP is preferably in the range of 50 MPa or more and 500 MPa or less.

The green compact is subjected to a drying step as needed. The drying step has an effect of removing the solvent when wet mixing is performed in the mixing step. Examples of the drying step include spontaneous drying and drying with heating. In drying with heating, the temperature is preferably controlled in the range of 80°C or higher and 200°C or lower. At a temperature of less than 80°C, the drying efficiency may be reduced. At a temperature of more than 200°C, uneven drying may occur. For this reason, the drying temperature is in the range of preferably 80°C or higher and 200°C or lower, more preferably 100°C or higher and 160°C or lower.

Next, the green compact is subjected to a degreasing step as needed. The organic binder can be removed from the green compact by performing the degreasing step. The degreasing temperature is preferably in the range of 400°C or higher and 700°C or lower. Examples of the degreasing step include degreasing in the air and that in a nitrogen atmosphere. A green compact obtained through the degreasing step may be referred to as degreased green compact in some cases.

Next, the green compact, for example, the degreased green compact is subjected to a sintering step. The sintering step is preferably performed in the range of 1600°C or higher and 2000°C or lower. The sintering step can be performed using normal pressure sintering, pressure sintering, or hot isostatic pressing (HIP), for example. Examples of the sintering step include sintering in the air, that in a non-oxidative atmosphere, that in a reducing atmosphere, and that in vacuum. The normal pressure sintering indicates sintering under a condition where the pressure is controlled to atmospheric pressure (1 atm = 0.1 MPa). The pressure sintering indicates sintering under a pressure higher than the atmospheric pressure. Uniaxial pressure sintering may be referred to as hot press in some cases. HIP is a sintering method in which a gas isotropically applies pressure.

This can reduce internal defects inside the silicon nitride sintered compact 10, such as vacancy and crack. The pressure for HIP is preferably in the range of 10 MPa or more and 200 MPa or less. Alternatively, normal pressure sintering, pressure sintering, and HIP can be used in combination. In the wear-resistant member, one or both of pressure sintering and HIP are preferably used. By sintering while pressure is being applied, a silicon nitride sintered compact 10 (e.g., ball blank 6) having reduced internal defects can be obtained.

The silicon nitride sintered compact 10 can be obtained through the sintering step. The sliding surface of the silicon nitride sintered compact 10 is polished to prepare a wear-resistant member. For example, in a ball-shaped silicon nitride sintered compact 10 (e.g., the ball blank 6) for obtaining a bearing ball, the entire surface serves as the sliding surface.

Preferably, the sliding surface of the silicon nitride sintered compact 10 has a surface roughness Ra of 0.1 µm or less. By controlling the surface of the silicon nitride sintered compact 10 to be substantially flat surface, the silicon nitride sintered compact 10 can have improved wear resistance. For this reason, the surface roughness Ra of the sliding surface is preferably 0.1 µm or less, more preferably 0.01 µm or less. The silicon nitride sintered compact 10 according to the embodiment has excellent free-machining properties, and thus has improved processability when prepared into a wear-resistant member. In other words, the polishing time for preparing the silicon nitride sintered compact 10 into a wear-resistant member can be reduced.

Moreover, the durability of the grinding wheel for polishing the silicon nitride sintered compact 10 can be improved. Usually, a diamond grinding wheel is used in the step of polishing the silicon nitride sintered compact 10. Improved durability of the grinding wheel is effective not only in reducing costs but also in the production efficiency of the wear-resistant member (improvement in processability). Thus, the silicon nitride sintered compact 10 having improved processability can be provided.

### Examples

### (Examples 1 to 5, Comparative Examples 1 to 2)

As raw material powders, a silicon nitride powder and sintering aid powders were provided. The raw material powders for silicon nitride sintered compacts 10 according to Examples 1 to 5 and raw material powders for silicon nitride sintered compacts according to Comparative Examples 1 to 2 were mixed on the conditions shown in Table 1. The mixing ratio is shown where silicon nitride powder + sintering aid powders is regarded as 100% by mass. In Examples, a silicon nitride powder having an average particle size smaller than those of the sintering aid powders was used.

**[Table 1]**

| | Raw Material Powders [% by mass] |
|---|---|
| Example 1 | Si₃N₄(91), Y₂O₃(5), Al₂O₃ (3), TiO₂(1) |
| Example 2 | Si₃N₄(87.5), Y₂O₃(6), Al₂O₃(3), AlN(2), WC(1.5) |
| Example 3 | Si₃N₄(90.5), Y₂O₃(4), Al₂O₃(4), HfO₂(1), TiO₂(0.5) |
| Example 4 | Si₃N₄(84.2), Y₂O₃(7), Al₂O₃(4), AlN(3), Mo₂C(0.8), SiC(1) |
| Example 5 | Si₃N₄(87), Y₂O₃(6), Al₂O₃ (3), AlN(2), TiO₂(2) |
| Comparative Example 1 | Si₃N₄(91), Y₂O₃(5), Al₂O₃(3), TiO₂(1) |
| Comparative Example 2 | Si₃N₄(91), Y₂O₃(5), Al₂O₃(3), TiO₂(1) |

The raw material powders were mixed using a ball mill. In Examples, the mixing was performed while the conditions for the ball mill were varied. In Comparative Examples, the mixing was performed while the conditions for the ball mill were fixed. An organic binder and a solvent were added to the raw material powders, and were mixed using the ball mill.

Subsequently, the raw material powders mixed using the ball mill were granulated, followed by mold molding and CIP. The resulting ball-shaped green compact had a band portion on a perimeter of the spherical green compact. This green compact was the one for obtaining the ball blank 6 after sintering.

The green compact was subjected to a drying step and a degreasing step. The drying step was performed at 120°C. The degreasing step was performed in the range of 400 to 650°C. The resulting green compact, i.e., the degreased green compact was subjected to a sintering step. The sintering step was performed in two stages. The sintering conditions were as shown in Table 2.

**[Table 2]**

| | 1st Sintering Step | 2nd Sintering Step |
|---|---|---|
| Example 1 | 0.1MPa, 1750°C, 4hr | 5MPa, 1800°C, 3hr |
| Example 2 | 3MPa, 1800°C, 5hr | 10MPa, 1720°C, 4hr |
| Example 3 | 1MPa, 1850°C, 6hr | 70MPa, 1700°C, 3hr (HIP) |
| Example 4 | 1MPa, 1700°C, 3hr | 100MPa, 1650°C, 2hr (HIP) |
| Example 5 | 0.1MPa, 1900°C, 3hr | 50MPa, 1700°C, 4hr (HIP) |
| Comparative Example 1 | 0.1MPa, 1900°C, 3hr | 50MPa, 1700°C, 4hr (HIP) |
| Comparative Example 2 | 0.1MPa, 1900°C, 3hr | 50MPa, 1700°C, 4hr (HIP) |

Through the above-mentioned steps, silicon nitride sintered compacts 10 according to Examples and silicon nitride sintered compacts according to Comparative Examples were obtained. Specific cross-sections of the resulting silicon nitride sintered compacts (e.g., ball blanks) were analyzed using Raman imaging. A measurement region R was selected from a cross-sectional structure with a dimension of 400 µm × 400 µm. The measurement region R was divided into four small regions. The measurement conditions were as described above. The area ratios of the region 1 to 4 were determined when the total of the area ratio of the first region 1, that of the second region 2, that of the third region 3, and that of the fourth region 4 was regarded as 100%. The results are shown in Table 3. In Table 3, the case where the area ratios satisfied the conditions is shown as "YES", and the case where the area ratios did not satisfy the conditions is shown as "NO" .

**[Table 3]**

| | Area Ratio | | | |
|---|---|---|---|---|
| | 1st Rgn 0.5-8% Cond. (A) | 2nd Rgn 70-92% Cond. (B) | 3rd Rgn 2-16% Cond. (C) | 4th Rgn 0.5-8% Cond. (D) |
| Example 1 | YES | YES | YES | YES |
| Example 2 | YES | YES | YES | YES |
| Example 3 | YES | YES | YES | YES |
| Example 4 | YES | YES | YES | YES |
| Example 5 | YES | YES | YES | YES |
| Comparative Example 1 | YES | YES | YES | YES |
| Comparative Example 2 | NO | YES | YES | YES |
| | | | | |

| | Relationship with Different Measurement Region | | | |
|---|---|---|---|---|
| | Presence or Absence of Difference Ratio of 2% or more in Area Ratios of 1st Rgn Cond. (E) | | Presence or Absence of Difference Ratio of 2% or more in Area Ratios of 4th Rgn Cond. (F) | |
| Example 1 | Presence | | Presence | |
| Example 2 | Presence | | Presence | |
| Example 3 | Presence | | Presence | |
| Example 4 | Presence | | Presence | |
| Example 5 | Presence | | Presence | |
| Comparative Example 1 | Absence | | Absence | |
| Comparative Example 2 | Presence | | Presence | |

The first region 1 is a region of silicon nitride crystal particles oriented in a direction close to the vertical direction of the specific cross-section. The second region 2 is a region of silicon nitride crystal particles oriented in a direction close to the parallel direction of the specific cross-section. The third region 3 is a region of the rare earth element-aluminum-oxygen grain boundary phase. The fourth region 4 is a region of a substance containing at least one selected from the group consisting of titanium, hafnium, tungsten, molybdenum, and silicon carbide.

As shown in FIG. 2, four peaks detected between 180 cm⁻¹ inclusive and 230 cm⁻¹ in the Raman shift of the first region 1 were observed, and the peak on the left as one faces (detected at 184 to 190 cm⁻¹) was the largest peak. As shown in FIG. 2, three peaks detected between 180 cm⁻¹ inclusive and 230 cm⁻¹ were observed in the Raman shift of the second region 2, and the middle peak (detected at 200 to 210 cm⁻¹) was the largest peak.

As shown in Table 3, in the ball blanks 6 according to Examples 1 to 5, the conditions (A) to (D) for the area ratios that the area ratio of the first region 1 was 0.5% or more and 8% or less, the area ratio of the second region 2 was 70% or more and 92% or less, the area ratio of the third region 3 was 2% or more and 16% or less, and the area ratio of the fourth region 4 was 0.5% or more and 8% or less were satisfied. In the ball blanks 6 according to Examples 1 to 5, the conditions (A) to (D) were also satisfied in a different measurement region R. In addition, in the ball blanks 6 according to Examples 1 to 5, for the conditions (E) to (F) for the difference ratio of the area ratios, in a cross-sectional structure with a dimension of 400 µm × 400 µm, at least one region was present in which the differences in the area ratios of the first region 1 and the fourth region 4 were 2% or more.

On the other hand, as shown in Table 3, like in the ball blanks 6 according to Examples 1 to 5, the ball blank according to Comparative Example 1 satisfied the conditions (A) to (D) for the area ratios. However, in the ball blank according to Comparative Example 1, for the conditions (E) to (F) for the area ratios, the differences in those of the first region 1 and the fourth region 4 were less than 2%. In other words, those ball blanks had uniform structures having little unevenness. In the ball blank according to Comparative Example 2, a region was present in which while the conditions (B) to (F) were satisfied, a region was present in which the area ratio of the first region 1 was more than 8%.

Next, in the ball blanks 6 according to Examples 1 to 5 and the ball blanks according to Comparative Examples 1 to 2, the presence/absence of the amorphous phase in the third region and the presence/absence of the crystalline compound in the fourth region were examined. The presence/absence of adjacent small regions in which the difference ratios of the area ratio of the first region 1 and the area ratio of the fourth region 4 were 2% or more, respectively, were examined. The results are shown in Table 4.

**[Table 4]**

| | Presence/Absence of Amorphous Phase in 3rd Rgn | Presence/Absence of Crystalline Compound in 4th Rgn |
|---|---|---|
| Example 1 | Presence | Presence |
| Example 2 | Presence | Presence |
| Example 3 | Presence | Presence |
| Example 4 | Presence | Presence |
| Example 5 | Presence | Presence |
| Comparative Example 1 | Presence | Presence |
| Comparative Example 2 | Presence | Presence |

| | Presence/Absence in which Difference Ratios of Area Ratio of 1st Rgn and Area Ratio of 4th Rgn are 2% or more: Conds. (G) and (H) | In Adj. small Rgns, Presence/Absence in which Difference Ratios of Area Ratio of 1st Rgn and Area Ratio of 4th Rgn are 2% or more |
|---|---|---|
| Example 1 | Presence | Presence |
| Example 2 | Presence | Presence |
| Example 3 | Presence | Presence |
| Example 4 | Presence | Presence |
| Example 5 | Presence | Presence |
| Comparative Example 1 | Absence | Absence |
| Comparative Example 2 | Presence | Presence |

In both of Examples and Comparative Examples, a region in which the rare earth element-aluminum-oxygen grain boundary phase (third region 3) contained an amorphous phase was present.

In both of Examples and Comparative Examples, a crystalline compound was present in the fourth region 4. In the ball blanks 6 according to Examples 1, 3, and 5 and the ball blanks according to Comparative Examples 1 to 2, titanium nitride (TiN) crystal particles were present. In the ball blank 6 according to Example 2, tungsten carbide (WC) crystal particles were present. In the ball blank 6 according to Example 4, molybdenum carbide (Mo₂C) crystal particles and silicon carbide (SiC) crystal particles were present. In Examples, a measurement region R in which the difference ratios of the area ratio of the first region and that of the fourth region were 2% or more was present (condition (G)), and adjacent measurement regions R in which the difference ratio of the area ratios of the first region and the difference ratio of the area ratios of the fourth region were 2% or more was present (condition (H)). In the small regions obtained by dividing the measurement region R into four, a region the difference ratios of the area ratio of the first region and that of the fourth region were 2% or more was also present.

Since the ball blank according to Comparative Example 1 had a uniform structure, adjacent small regions in which the difference ratio of the area ratio of the first region 1 was 2% or more were absent, adjacent small regions in which the difference ratio of the area ratio of the fourth region 4 was 2% or more were absent, or both of them were absent.

Ball blanks 6 according to Examples and ball blanks according to Comparative Examples were provided. Both of the ball blanks 6 according to Examples and the ball blanks according to Comparative Examples were those for obtaining 3/8-inch (diameter: 9.5250 mm) bearing balls. These ball blanks each had a band portion on a perimeter of a spherical green compact.

Next, using a diamond grinding wheel, the ball blanks 6 according to Examples and the ball blanks according to Comparative Examples were polished to have a surface roughness Ra of 0.01 µm. In Examples and Comparative Examples, the time till replacement of the diamond grinding wheel was compared. The time till replacement of the diamond grinding wheel in each of the ball blanks 6 according to Examples was represented as a ratio to the time till replacement of the diamond grinding wheel in the ball blank according to Comparative Example 1 which was regarded as 100. A greater numeric value indicates a longer time till replacement of the grinding wheel, and thus, higher durability of the grinding wheel. The results are shown in Table 5.

**[Table 5]**

| | Time till Replacement of Grinding Wheel |
|---|---|
| Example 1 | 112 |
| Example 2 | 115 |
| Example 3 | 110 |
| Example 4 | 112 |
| Example 5 | 111 |
| Comparative Example 1 | 100 |
| Comparative Example 2 | 98 |

As shown in Table 5, in the ball blanks according to Examples, the time till replacement of the grinding wheel was about 10% improved, and the processability was improved. This was because improved free-machining properties led to improved durability of the grinding wheel.

In Examples and Comparative Examples, the bearing balls obtained by polishing were examined for durability. In the durability test, using a thrust-type rolling fatigue tester, the rolling life was measured at a maximum contact pressure of 5.9 GPa as a surface pressure and a rotational speed of 1200 rpm. For the counterpart member, a plate material formed from bearing steel SUJ2 was used. The measurement time was 400 hours, and the presence/absence of surface peel of the bearing ball was measured. In the bearing balls 5 according to Examples 1 to 5 and the bearing ball according to Comparative Example 1, surface peel was not observed. On the other hand, in the bearing ball according to Comparative Example 2, surface peel was slightly observed. As a result, it was found that the bearing balls obtained by polishing in Examples had favorable durability.

In Examples and Comparative Examples, an improvement in processability of the ball blank 6 (which was polished into a bearing ball) as one example of the silicon nitride sintered compact 10 has been verified. However, it is considered that the effect is not limited to the case where the silicon nitride sintered compact 10 was the ball blank 6, and is also obtained in a silicon nitride sintered compact 10 other than the ball blank 6 (silicon nitride sintered compact polished into a wear-resistant member other than the bearing ball) as long as it satisfies the conditions (A) to (F).

According to at least one of the embodiments described above, a silicon nitride sintered compact 10 (e.g., ball blank 6) having improved processability and a wear-resistant member (e.g., bearing ball 5) including the same can be provided. Moreover, by controlling the surface roughness Ra of the sliding surface of the silicon nitride sintered compact 10, a silicon nitride sintered compact 10 having improved processability while maintaining wear resistance, and a wear-resistant member including the same can be provided.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A silicon nitride sintered compact,
wherein in Raman imaging of a measurement region of 20 µm × 20 µm of a specific cross-section of the silicon nitride sintered compact where (1) among a region of silicon nitride crystal particles oriented in a direction close to a vertical direction of the specific cross-section within the measurement region and a region of silicon nitride crystal particles oriented in a direction close to a parallel direction of the specific cross-section, a region of silicon nitride crystal particles having a smaller area ratio is mapped as a first region, (2) a region of silicon nitride crystal particles having a larger area ratio is mapped as a second region, (3) a region of a rare earth element-aluminum-oxygen grain boundary phase within the measurement region is mapped as a third region, and (4) a region of a substance containing at least one selected from the group consisting of titanium, hafnium, tungsten, molybdenum, and silicon carbide within the measurement region is mapped as a fourth region,
an area ratio of the first region is 0.5% or more and 8% or less, that of the second region is 70% or more and 92% or less, that of the third region is 2% or more and 16% or less, and that of the fourth region is 0.5% or more and 8% or less, where a total of the area ratio of the first region, that of the second region, that of the third region, and that of the fourth region is regarded as 100%, and
among different measurement regions, a difference ratio of the area ratios of the first regions is optionally 2% or more and a difference ratio of the area ratios of the fourth regions is optionally 2% or more.

2. The silicon nitride sintered compact according to claim 1, wherein in 400 µm × 400 µm of the specific cross-section, the measurement region is present in which the difference ratio of the area ratios of the first regions is 2% or more and the difference ratio of the area ratios of the fourth regions is 2% or more.

3. The silicon nitride sintered compact according to claim 1 or 2, wherein a plurality of first regions are present within the measurement region.

4. The silicon nitride sintered compact according to claim 1 or 2, wherein a plurality of fourth regions are present within the measurement region.

5. The silicon nitride sintered compact according to claim 3, wherein a plurality of fourth regions are present within the measurement region.

6. The silicon nitride sintered compact according to claim 1 or 2, wherein the third region contains an amorphous phase.

7. The silicon nitride sintered compact according to claim 5, wherein the third region contains an amorphous phase.

8. The silicon nitride sintered compact according to claim 1 or 2, wherein the substance which is present in the fourth region and contains at least one selected from the group consisting of titanium, hafnium, tungsten, molybdenum, and silicon carbide includes the one which is present as a crystalline compound.

9. The silicon nitride sintered compact according to claim 5, wherein the substance which is present in the fourth region and contains at least one selected from the group consisting of titanium, hafnium, tungsten, molybdenum, and silicon carbide includes the one which is present as a crystalline compound.

10. The silicon nitride sintered compact according to claim 7, wherein the substance which is present in the fourth region and contains at least one selected from the group consisting of titanium, hafnium, tungsten, molybdenum, and silicon carbide includes the one which is present as a crystalline compound.

11. A wear-resistant member comprising the silicon nitride sintered compact according to claim 1 or 2.

12. A wear-resistant member comprising the silicon nitride sintered compact according to claim 5.

13. A wear-resistant member comprising the silicon nitride sintered compact according to claim 7.

14. A wear-resistant member comprising the silicon nitride sintered compact according to claim 10.

15. The wear-resistant member according to claim 11, wherein the wear-resistant member has a sliding surface having a surface roughness Ra of 0.1 µm or less.

16. The wear-resistant member according to claim 12, wherein the wear-resistant member has a sliding surface having a surface roughness Ra of 0.1 µm or less.

17. The wear-resistant member according to claim 13, wherein the wear-resistant member has a sliding surface having a surface roughness Ra of 0.1 µm or less.

18. The wear-resistant member according to claim 15, wherein the wear-resistant member is a bearing ball.

19. The wear-resistant member according to claim 16, wherein the wear-resistant member is a bearing ball.

20. The wear-resistant member according to claim 17, wherein the wear-resistant member is a bearing ball.
